# EUROPEAN PATENT SPECIFICATION

(11) **EP 3 162 982 B1**
(45) Date of publication and mention of the grant of the patent: **20.06.2018**
(21) Application number: 16196607.2
(22) Date of filing: 31.10.2016
(51) Int. Cl.: E04H 6/28, B60S 13/02, E04H 6/40, A47F 5/025

(54) **LOW PROFILE ROTATING PLATFORM FOR VEHICLES, MODULAR STRUCTURED AND EXPANDABLE**
NIEDERQUERSCHNITTDREHPLATTFORM FÜR FAHRZEUGE, MODULAR AUFGEBAUT UND ERWEITERBAR
PLATEFORME TOURNANTE À SECTION BASSE POUR VÉHICULES, STRUCTURÉE MODULAIREMENT ET EXPANSIBLE

(30) Priority: 02.11.2015 GR 20150100470
(43) Date of publication of application: 03.05.2017
(73) Proprietor: Toumpas, Christos, 11254 Athens (GR)
(72) Inventor: Toumpas, Christos, 11254 Athens (GR)

(56) References cited:
- FR-A1- 2 875 768
- GB-A- 2 411 383
- US-B2- 6 817 300
- US-B2- 7 631 602

## Description

The invention refers to a platform of circular shape, placed on flat ground, having low height and such radius, as to enable any kind of vehicle to be placed on it. Supported by small electric motors, the top surface of the platform possesses the ability to rotate around its own axis and consequently passing the rotation on to the vehicle parked on top of it, to the desired angle.

Offering easy access to any part of its periphery due to its low height, the aim of this platform is to enable the driver park and rotate any vehicle on to it, using the least possible space.

The rotation of the vehicle around its own axis, gives the driver the opportunity to approach, utilize and abandon confined parking spaces, display vehicles in exhibit halls, as well as maximize the efficiency of vehicle workshop spaces.

The platform can also be utilized to rotate large and heavy weight objects, accordingly.

The platforms or turntables used so far to rotate vehicles consist of a circular surface, parallel to the ground level, which, assisted by a ball bearing, rotates around a strong and load durable vertical axis fixed into the ground. During the rotation, the whole surface of the platform trundles on the ground using evenly distributed rollers or wheels placed under it.

Due to the heavy weight of the vehicle in rotation, the demands of this kind of platform in statics, lead to the necessity of large numbers of rollers or wheels. In addition, considering the fact that the structure has to incorporate a very high rigidity factor, there is an immediate effect on the total platform weight, the degree of elevation from the ground level, the required power for the rotation, the transportation and installation requirements as well as the level of interference within the operating environment, such as the need of a manhole for the incorporation of the bulky rotating structure or the installation of the required electric motor.

The currently used platforms are characterized by binding geometrical features as to their initial design, as well as lack of flexibility, regarding any modification or any possible alteration to satisfy an alternate demand, such as the rotation of a larger vehicle or the rotation of more than one vehicle simultaneously. Moreover, the construction, assembly and disassembly and transportation of the currently used platforms, is generally arduous and costly.

An interesting approach to the problem of the pivotal vehicle rotation has been carried out by the "Low profile vehicle turntable", which is described in the Patent US 6817300 B2 and US 7631602 B2. The afore-mentioned Patents describe a circular platform, which consists of eight connected circular, low height sectors and assisted by a ball bearing, rotates around a load durable vertical axis. In order to roll, the eight circular sectors contain a number of rollers placed on the bottom surface of them and in contact with concentric circular bands placed on the ground. The afore-mentioned structure introduces a solution to the motion issue, using small, peripheral motors embodied to it, thus avoiding any intervention in the installation space. Nevertheless, it consists of bulky, heavy weight pieces and it is not expandable.

The present invention differs from the current state of technique, as to the fact that in order to rotate a vehicle around its own axis, it suggests the existence of a platform which, consisting of low weight, small dimension, independent, standardized structural elements (modules), offers the ability to be put together as a whole. These modules are the "surface elements", the "rolling carriers", the "peripheral elements", the "motion mechanisms" and the "delimitation wheels".

The "surface elements" are thin surfaces, made of durable material, with appropriately defined outline, which - connected to each other - compose two circular surfaces, independent and parallel to the ground. One of these surfaces, also referred to as the "stable surface", is circular-shaped and in contact with the ground, whereas the second one, also referred to as the "rotation surface", is ring-shaped and rotates on top of the "stable surface" and around the common, virtual axis, vertical to their centers, which is also the symmetry axis of the platform.

The "rolling carrier" is a thin carrier, in which a small number of highly durable little spheres, of a diameter slightly larger than the carrier's thickness, nestle and rotate freely. The "rolling carriers", connected in succession, compose the independent "ring carrier", which is ring-shaped. More than one "ring carriers", each one placed on the outside of the perimeter of the previous one, compose the "rolling surface". The "rolling surface", being of identical dimensions with the "rotation surface", rotates rolling between the "rotation surface" and the "stable surface" and around the virtual, vertical symmetry axis of the platform.

The "peripheral element" has a sloping surface, as it is the surface through which the vehicle gains access on to the platform and is made of durable material. Multiple "peripheral elements" get connected circularly and are stably adjusted on the outside of the periphery of the "stable surface" of the platform, thus defining peripherally the rotation of the "rotation surface" ring. The peripheral elements are utilized to incorporate the "motion mechanism" or the "delimitation wheel", elements that are described below or used as "peripheral link elements" for the platform expansion.

The "motion mechanism" consists of an electric motor with a reduction gear, which is embodied into one of the "peripheral element" and sets in motion a "motion belt", which is a polyurethane round belt around the "rotation surface", in order to rotate it. Depending on the power in demand, it is possible for one or more "motion mechanisms" to be used, which can be driven and synchronized by a central motion controller.

The "delimitation wheel", is a wheel formed as a pulley with a ball bearing and is embodied in a parallelepiped base. The "delimitation wheels" are embodied in the "peripheral elements" horizontally and are placed at the level of the external periphery of the "rotation surface" ring. In addition, "delimitation wheels" are also embodied in the "stable surface" and are placed at the level of the internal periphery of the "rotation surface" ring, thus delimiting the smooth rotation of the latter around the virtual axis at the centre of the platform. At the embodiment points, the "delimitation wheels" are supported by an elastic mechanism, which pushes them towards the contact point with the "rotation surface" and is located on the "motion belt", thus achieving better adhesion while simultaneously absorbing the shock.

According to all the afore-mentioned, in order to rotate a vehicle around its own axis, the platform according to the present invention uses a "rotation surface" which, supported by "motion mechanisms" and within a motion belt, rotates smoothly while rolling on the "stable surface" using the "rolling surface". Its motion is being delimited by the "peripheral elements" through the "delimitation wheels".

In order to rotate larger and/or more than one vehicles, the platform has the ability of gradual expansion in a peripheral manner to the already existing structure, by adding new structural units of "surface elements", which, in every expansion, compose a new "rotation surface" ring. The rotation of the added "rotation surface" elements, is supported by new rolling sections which compose new "rolling rings" that roll on new structural units of "surface elements" of the "stable surface". The already existing "peripheral elements" move to a periphery of larger radius, where the in between gaps are filled by new elements and if necessary a new "motion mechanism" is added.

For the construction of the platform, industrial, high-strength plastic can be used with the exception of only a few metal components. Moreover, the structural elements are of low weight and volume, so as for the platform to be possible to be constructed, deconstructed, packaged and transported solely by one person.

The placing of the platform does not require any intervention in the installation space, only the existence of flat ground and suitable dimensions to host the structure, while the power supply for the motor of the "motion mechanism" of the "rotation surface" is achieved through a routing channel of low voltage cabling with the appropriate specifications.

On occasions where the platform is required to be at the same level with its supporting surface, its low height offers the ability of easy embodiment to a suitable recess on the ground or a floor, where either the recess is pre-planned during the construction of the floor, or the floor is elevated so as to embody the platform.

In the proposed platform, by modifying the density of the spheres in the "rolling carriers", i.e. their number per unit area, the "rotation surface's" thickness is modified accordingly, so as to achieve the necessary rigidity under the load of the prescribed vehicle weight. The optimum ratio between the number of spheres per unit area and the thickness of the "rotation surface" is leading to the minimum height of the platform, the minimum weight of the "rotation surface" and the minimum electric power demand for the rotation.

In contrast with the all the current practices and the current state of technique as described in all the patent diplomas, the "rotation surface" being of a ring shape, does not rotate around a physical axis. On the contrary, it is forced into rotation around a virtual axis on its centre, which is also the axis of the platform, by the "delimitation wheels" which are placed both in the "peripheral elements" at the external periphery of the ring and in the "stable surface" at the internal periphery of the ring. The afore-mentioned technique is characterized by three advantages:
To begin with, the strain caused on the "rotation surface" during the admission and departure of the vehicle from the platform, is evenly distributed on many parts of its internal as well as its external periphery.

Secondly, the "delimitation wheels", having a base that rolls on appropriately shaped channel and controlled by an elastic configuration, are placed horizontally, formed as pulleys and are tangent to the "rotation surface", thus firmly restraining the latter onto the circular cross sectioned "motion belt" and absorbing the stress both during the rotation and the entrance-exit of the vehicle as well.

Thirdly, the circular surface defined by the internal periphery of the "rotation surface" ring, belongs to the "stable surface" and does not contribute to the rotation. Furthermore, its radius is determined by the track width and the wheelbase of the smallest vehicle in rotation, so as the wheels of this vehicle are placed on the rotating ring.

In Design 1, a perspective view of the platform with a vehicle is displayed, where its basic characteristics are introduced.

In Design 2, a perspective view of the platform is displayed, where its functional levels are introduced in vertical span.

In Design 3, a perspective view of the platform is displayed, where the correlation between the functional levels is presented.

In Design 4, a perspective view of the surface elements is displayed, where the surface's linking components as well as the way they achieve the connection is presented.

In Design 5, a perspective view of the rolling carrier is displayed, analyzed to its components.

In Design 6, a perspective view of four rolling carriers is displayed, as well as the way they are participating to the rolling surface's circular ring.

In Design 7, a perspective view of the peripheral element with external embodied delimitation wheels is displayed.

In Design 8, a perspective view of the internal embodied delimitation wheels into the central element of the stable surface is displayed.

In Design 9, a perspective view of the motion mechanism of the peripheral element is displayed, in vertical development.

In Design 10, a perspective view of the 1^{st} expansion of the platform is displayed.

In Design 11, a single comparing perspective view is displayed concerning the visible elements of the platform's basic composition as well as seven of its expansions.

In Design 12, a single comparing perspective view is displayed, concerning the full development of the platform's basic composition as well as the full development of its seven expansions, with added examples of possible vehicles in rotation.

The present invention uses as its main construction material for the platform, industrial, high-strength plastic, while in order to be possible for the platform to be used in outdoor spaces, the very few metal components used are of stainless steel. The industrial plastic elements can be constructed either by processing semi-finished material, or by casting in molds. The latter, combined with the other main characteristic of the patent, which is its modular construction, could lead to great cost reduction in a massive production scale.

In Design 1, a perspective view of the platform with a vehicle is displayed, where the ring shape rotation surface (1), the peripheral ring (4) and part of the stable surface (2) contained by the rotation surface ring (1), are presented.

In Design 2, the functional levels of the platform are presented vertically. On the stable surface (2) level its basic elements (20) as well as the elements of the centre (203) are displayed. Subsequently follows the rolling surface level (3), where for presentation reasons only the rolling spheres are depicted (302). Next is the rotation surface (1) level, where its basic elements (10) are demonstrated, while the motion mechanism (5), the peripheral delimitation wheels (6A) and the inner delimitation wheels (6B) are depicted on the same functional level as well. Finally, the level of the peripheral ring (4) is displayed, which consists of the peripheral elements (46) and the peripheral element (45) containing the motion mechanism (5).

In Design 2, the modular construction of the platform is also visible, where modules made of industrial, high-strength plastic material are used for its basic construction. These modules are 12 Rotation Surface Basic Elements (10), 6 Stable Surface Center Elements (203), 12 Stable Surface Basic Elements (20), 4512 small spheres (302) (which are every 4 of them allocated to 1128 rolling carriers (30)), 24 Peripheral Elements (45) and (46), 60 Delimitation Wheels (6A) and (6B), with the only metal parts being the Motion Mechanism (5) (Design 9), the surface's Linking Components (7) and (7A) (Design 4) and the flexible thrust plates of the Delimitation Wheels (63) (Design 7 and 8).

In Design 3, a perspective view of the platform is displayed, where the correlation between the functional levels is visible. The level in contact with the ground is the stable surface (2) and it consists of the central link (201) and its lead (202). The central link and its lead are surrounded by the six elements of the centre (203), which, in turn, consist of the base (204) and the lead (205) of the elements of the centre. Finally, the six elements of the centre are surrounded by the twelve basic elements (20) of the stable surface, all of which are connected to each other using the surface's linking components (7) either with notches (7A) or without. On top of the afore-mentioned twelve basic elements (20), the rolling surface's circular ring is assembled (3) and defined by eleven concentric rings, where each one of them consists of rolling carriers (30) that are connected in succession to each other. On top of the rolling surface, the twelve basic elements (10) that compose the rotation surface (1) are assembled using the surface's linking components (7). Finally, the peripheral elements (46), consisting of the base (461) and the lead (462), are placed around the perimeter of the stable (2), the rolling (3) and the rotation (1) surfaces. The peripheral elements (46) are connected firmly to the stable surface's basic elements (20) using the surface's linking components (7) and meanwhile, using the peripheral embodied delimitation wheels (6A), the peripheral elements are also delimiting the rotation surface ring motion along its external perimeter. Likewise, the stable surface's six elements of the center (203), which consist of the base (204) and the lead (205), are delimiting the rotation surface ring motion along its inner perimeter, by using the inner embodied delimitation wheels (6B). In addition, the peripheral element (45), consisting of the base (451) and the lead (452) and containing the motion mechanism (5), is also visible.

In Design 4, a perspective view of the surface elements is displayed, where the components as well as their connection method is presented, such as the receiving recess (70) on their connecting point. On the receiving recess the surface's linking component (7) with notches or without notches (7A), is placed and stabilized using the locking rods (71). In order to connect, the two neighboring surfaces have both the receiving recess (70) and two different connection ways are proposed. On the first one, where there is one degree of freedom, one of the surfaces bears the component (7) which is fixed using the locking rods (71), while the other one bears only the locking rods (71). On the second connecting option, where there are two degrees of freedom only one of the surfaces bears the component (7A) stabilized with the locking rods (71), while the other one is receiving it in its notch.

The rotation surface elements, which are ring-sector shaped (10), are connected to each other only to the direction of the rotation radius, using the first way of connecting (7) with the one degree of freedom. The curvy sides of the rotation surface elements, are properly shaped so as to be delimited by the delimitation wheels (6A) and (6B). This proper shaping consists on one hand of the recess of semi-circular cross section on the external surface (101) for the reception of the motion belt, on which the delimitation wheel (6A) is tangent and on the other hand the shaping is a dent of semi-circular cross section (102) (Design 8), on which the delimitation wheel (6B) is tangent.

On the sides located along the radius, the stable surface elements, are connected to each other alongside the radius direction complying with the second way of connecting (7A), whereas on the rest of the sides they use the first way of connecting (7). The connection between the stable surface elements (20) and the peripheral elements (45) and (46) (Design 7), follows the first way of connection as well, while the peripheral elements (10) connect to each other alongside the radius direction following the second way (7A).

In Design 5, a perspective view of the rolling carrier is presented (30), deconstructed to its basic components which are the four rolling spheres (302), the wheel in contact with the rolling surface's outer limit (303) and the wheel in contact with the rolling surface's inner limit (304). All the afore-mentioned components are encapsulated between two identical bases (300), from which the lower one contains the locking rod (301L) and the upper one the locking rod (301R) and to these two rods, two sequential rolling carriers are connected. Finally, the upper and lower bases are connected to each other forming the locking notch (308) with a previous ring of the rolling surface and the locking dent (309) with a following ring of the rolling surface.

In Design 6, a perspective view of four (A,B,C,D) rolling carriers (30) that participate in the rolling surface's circular ring is displayed. The rolling surface rotates around its centre, as the arrows (307) indicate. Moreover, there is a view of carrier's B locking rod (301R), which connected to carrier's C locking rod (301L), create a rotation axis around which the carriers B and C rotate in the direction indicated by the arrows (306). The connection between 301R(B)-301L(C), has the extra property of showing low tolerance (2mm) in the direction of the arrows (305). Every rolling carrier (30) belongs to a specific rolling ring, which consists of carriers that have the same distance from the rotation centre and are connected in succession to each other, using locking rods. The ability of neighboring carriers, like B and C, to rotate around their connecting point (305) up to 60°, allows the formulation of rings, consisting of carriers that form an angle with each other. This angle is in proportion with their distance from the ring's centre of rotation and gains its maximum value of 4,9° in the smallest ring.

In Design 6, the engagement of the circular ring, in which the carriers B and C are part of, with the inner ring, which A is a part of, is achieved through the locking notches (308) and with the outer ring, which D is a part of, the lock is achieved through the locking dents (309). Each circular ring can contain a specific number of carriers depending on its radius, which is defined by the distance of the carriers' connecting point to the centre of rotation. The 2mm tolerance on the connection point of neighboring carriers located on the same ring, offers the opportunity of the addition of an extra carrier, if the rest of the carriers are compressed. Consequently, on the first and smallest ring, there are 72 carriers with a total of 2mmX72=144mm tolerance provision, which is larger than the 80mm distance required between the connection points, in order for an extra carrier to be added and close the ring fully.

This design of the rolling carrier (30) (Designs 5,6), achieves a construction of the rolling surface (3) of the main platform and its expansions, with evenly spread rolling spheres, just by the multiplication of one and only structural element (module) (30). Thus, 1128 carriers are required for the main platform, 436 more carriers for the 1^{st} expansion, 492 more for the 2^{nd} expansion, 546 more for the 3^{rd} expansion, 602 more for the 4^{th}, 657 more for the 5^{th}, 712 more for the 6^{th}, 768 more for the 7^{th}.

In Design 7, a perspective view of the peripheral element (46) is displayed, which consists of the base (461) and the lead (462). The peripheral element (45) is connected firmly to the basic elements of the stable surface (20), using the surface's linking components (7). Through the embodied peripheral delimitation wheels (6A), which are tangent to the motion belt (54), the motion of the rotation surface ring is delimited on its outer perimeter. The delimitation wheel (6A) consists of the pulley (62), which rotates around an axis embedded in the support structure (61) and slides in the recess formed between the peripheral element's base (461) and lead (462). The sliding is controlled by flexible thrust plates placed at the back of the base (61), which on one hand push the delimitation wheel on to the rotation surface and on the other hand absorb the oscillation during the ascendance-descent of the vehicles.

In Design 8, a perspective view of the embodied inner delimitation wheels (6B) is displayed, which delimits the motion of the rotation surface's ring (1) to its inner perimeter. The inner delimitation wheel (6B) is identical to the outer delimitation wheel (6A) and consists of the pulley (62) which rotates around an axis embedded in the support structure (61) and slides in the recess formed by the base (204) and the lead (205) of the stable surface's element of the centre. The sliding is controlled by flexible thrust plates placed at the back of the base (61) and have the same function as in the peripheral elements.

In Design 9, a perspective view of the peripheral element containing the motion mechanism is displayed in vertical development, where also visible are the rotation surface (1), the stable surface (2), the rolling surface (3), the peripheral ring (4) and the linking component (7A) with which the neighboring peripheral element is connected, while through the linking component (7) the neighboring peripheral element is connected with the stable surface (2) as well.

The peripheral element containing the motion mechanism consists of the base (451) and the lead (452) which formulates an appropriate recess in order for the motion mechanism to be placed into. The motion mechanism consists of the motion substructure (55) which also includes the low height motor (51) (pancake type), the gears which compose the reducer (52) in order to achieve a final angular velocity of the rotation surface with the vehicle in rotation, up to 1 rpm and the motion pulleys (53), where the pulleys A and C are tangent to the rotation surface (1) leading the motion belt (54), which in turn surrounds the pulley B. The motion is transferred from the motor (51) through the reducer (52) to the pulley B and through the cogs (56) to the two pulleys A and C, thus with this configuration achieving greater contact with the motion belt (54), minimizing its sliding.

The required torque that must be applied to the periphery of the rotation surface (1) carrying the rotating vehicle, in order to acquire a rotation with angular velocity up to 1 rpm, is achieved through the afore-mentioned configuration and the use of a motor of appropriate specifications. In occasions of high demand, like when expansions of the platform are used, more peripheral elements containing motion mechanisms (45) are used and are evenly spread along the rotation surface's periphery. The motion and coordination of the motors is handled by a mutual controlling and guiding mechanism, with the wiring of the motors' guiding to be leading directly to their peripheral elements through tunnels of appropriate specifications.

In Design 10, a perspective view of the 1^{st} expansion is displayed, where the elements of the basic platform are visible and which are the rotation surface's basic element (10), the stable surface's element of the centre (203), the stable surface's main element (20) and the peripheral element with a delimitation wheel (46). The new elements added are the stable surface's 1^{st} expansion (21), the rolling surface's 1^{st} expansion (31) with three more circular rings consisting of rolling carriers, the rotation surface's 1^{st} expansion (11), the 1^{st} expansion's linking peripheral element (471) which fills the gaps of the already existing peripheral elements (46) and which are transferred to a larger radius periphery, the new, longer motion belt (54) and the linking components with (7) or without (7A) notches.

In Design 11, the visible elements of the basic platform structure and its seven expansions are presented in a single comparing perspective view, where the expansions occur by adding a ring with such width as the sum of the widths of three rolling carriers' rings, as displayed in the case of the 1^{st} expansion in Design 10. The elements of the basic composition are the lead of the stable surface's central link (202), the stable surface's element of the centre (203), the rotation surface's main element (10) and multiple peripheral elements with delimitation wheels (46), which are the same that are used at the expansions' perimeter. The 1^{st} expansion uses all the elements of the basic composition, multiple elements of the rotation surface's 1^{st} expansion are added around the perimeter (11) and between the peripheral elements using delimitation wheels (46), links of the 1^{st} expansion are added (471), while the elements of the stable surface's 1^{st} expansion (21) as well as elements of the rolling surface's 1^{st} expansion, that are presented in Design 10, are not visible. Accordingly, the 2^{nd} expansion with the elements (12) and (472), the 3^{rd} expansion with the elements (13) and (473) and the 4^{th} expansion with the elements (14) and (474), are developed. The 5^{th} expansion differentiates from the previous ones, as additionally to the elements (15) and (474), it uses the elements (13) of the 3^{rd} expansion as well. The 6^{th} expansion differentiates, as additionally to the elements (16) and (476) it uses the elements (13) of the 3^{rd} expansion as well. The 7^{th} expansion also differentiates, as additionally to the elements (17) and (477) it uses the elements (14) of the 4^{th} expansion as well.

In Design 12, the basic composition and seven fully developed platforms are presented in a single comparing perspective view, with examples of potentially rotated vehicles. A small-medium passenger vehicle is placed on the basic composition's platform (80), a large passenger vehicle is placed on the 1^{st} expansion's platform (81), a sport utility vehicle (SUV) is placed on the 2^{nd} expansion's platform (82), two small passenger vehicles are placed on the 3^{rd} expansion's platform (83), an ambulance is placed on the 4^{th} expansion's platform (84), two large passenger vehicles are placed on the 5^{th} expansion's platform (85), two sport utility vehicles (SUVs) are placed on the 6^{th} expansion's platform (86) and two ambulances are placed on the 7^{th} expansion's platform (87).

As described in Designs 10, 11, 12, concerning the expansions (81), (82), (83), (84) of the platform in example, 24 new units of the Rotation Surface's Basic Elements, 24 new units of the Stable Surface's Basic Elements, 436 to 602 Rolling Carriers and 24 Peripheral Linking Elements are used, while for the expansions (85), (86), (87) of the platform in example, 48 new units of the Rotation Surface's Basic Elements, 48 new units of the Stable Surface's Basic Elements, 657 to 768 Rolling Carriers and 24 Peripheral Linking Elements are used.

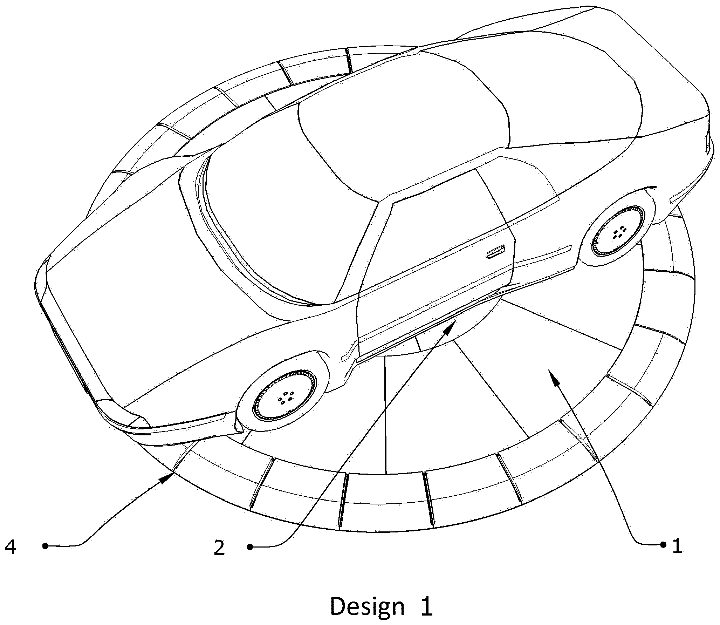

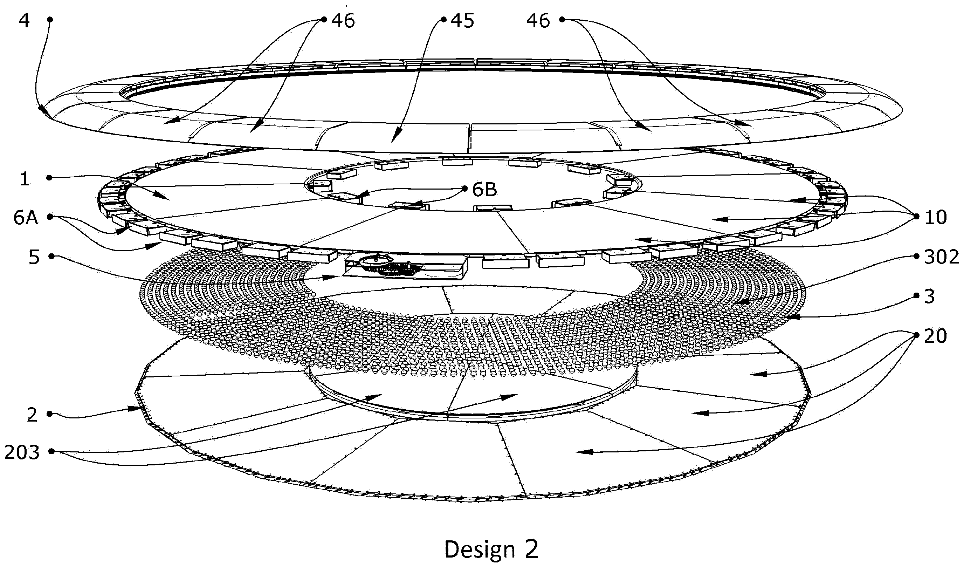

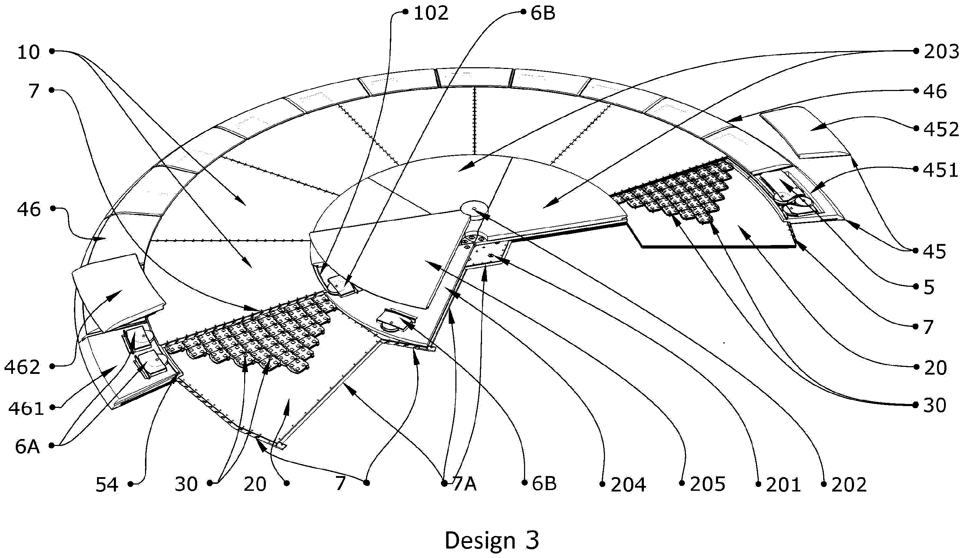

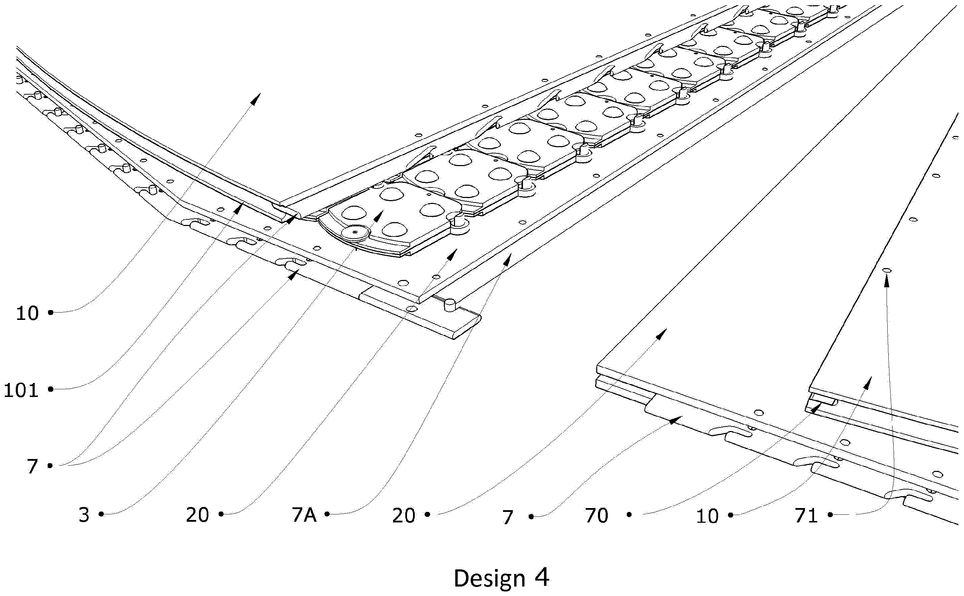

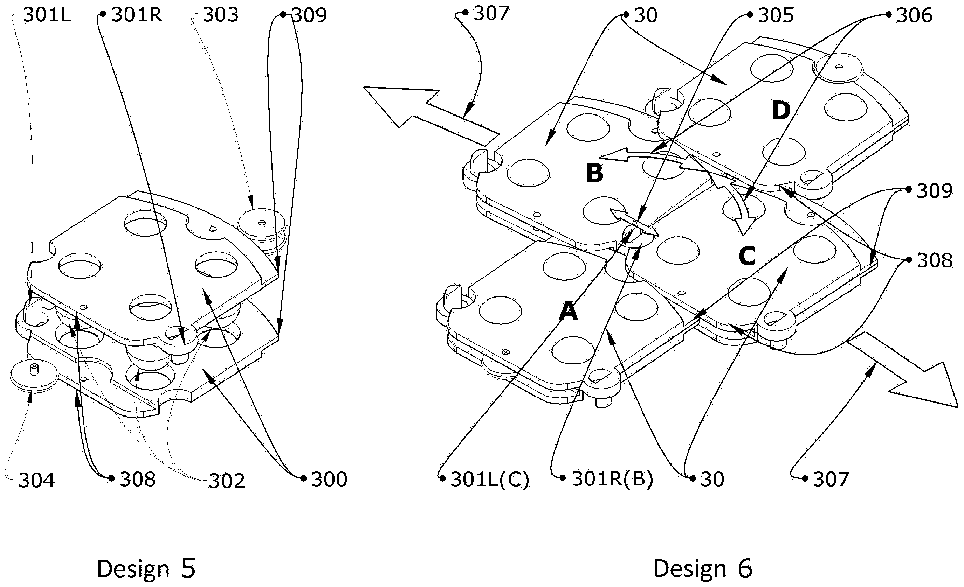

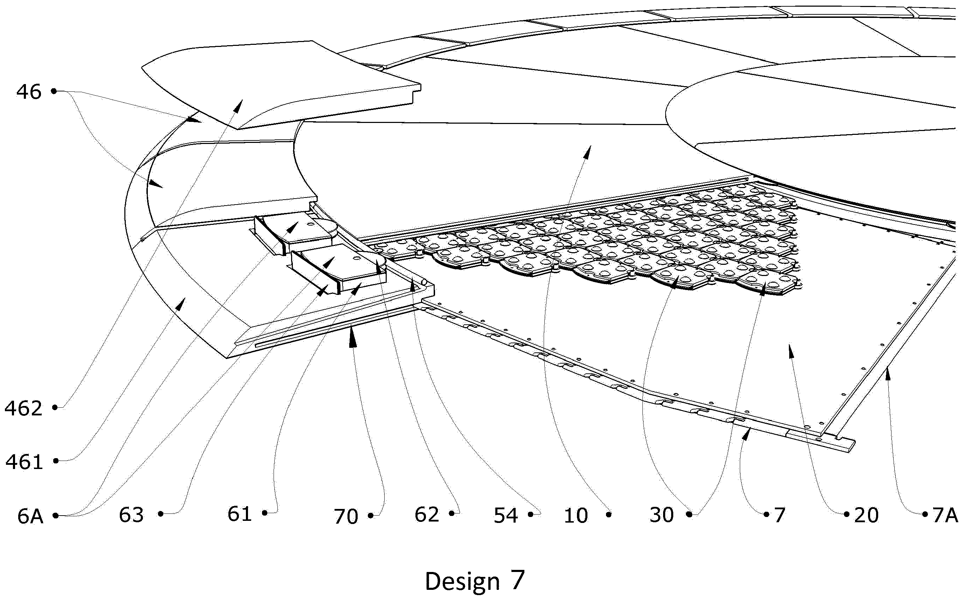

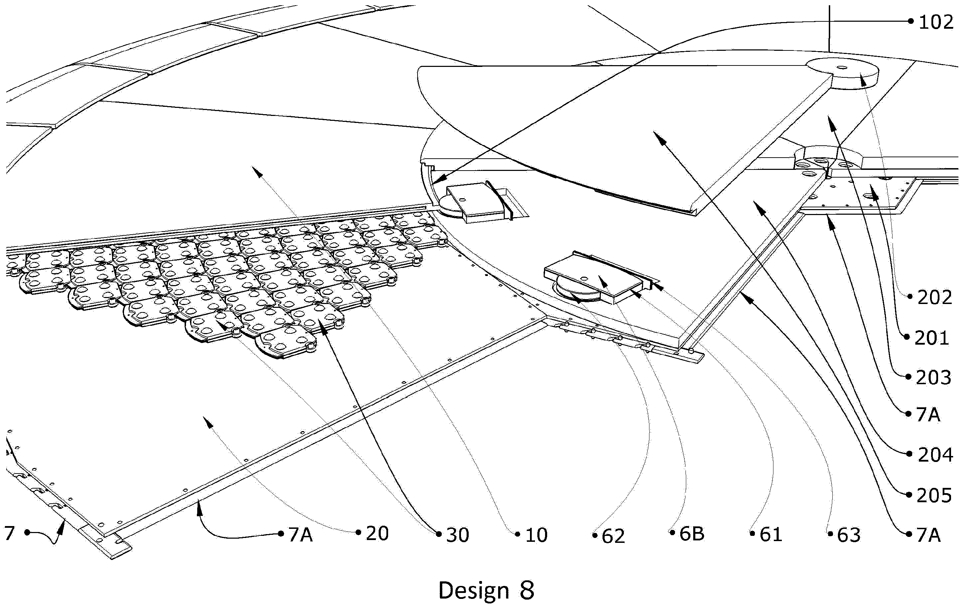

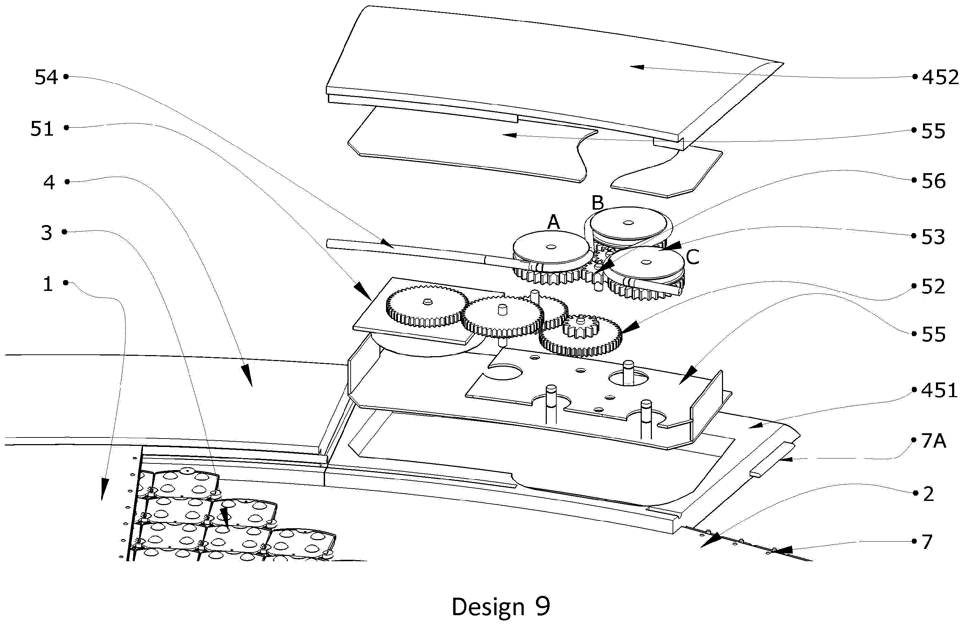

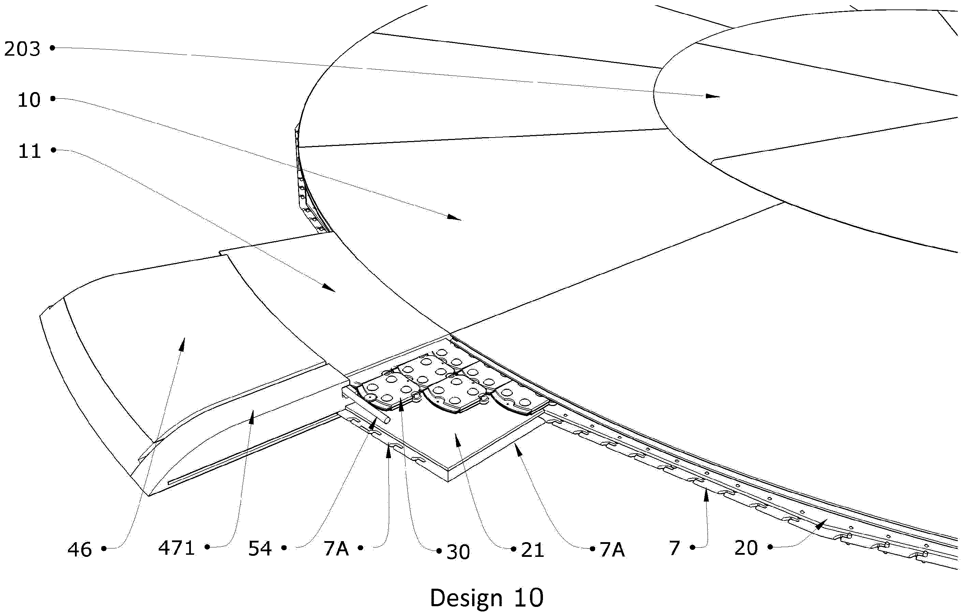

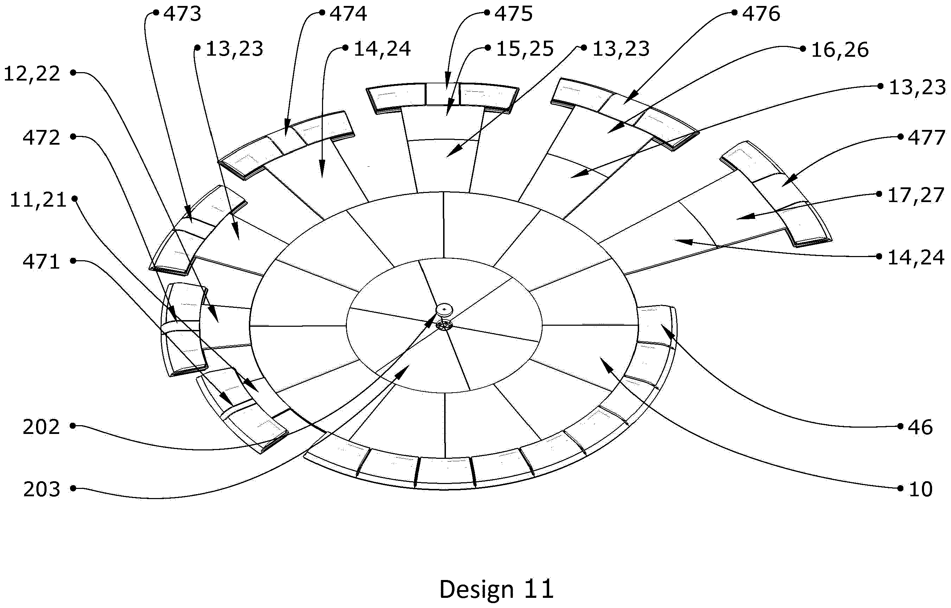

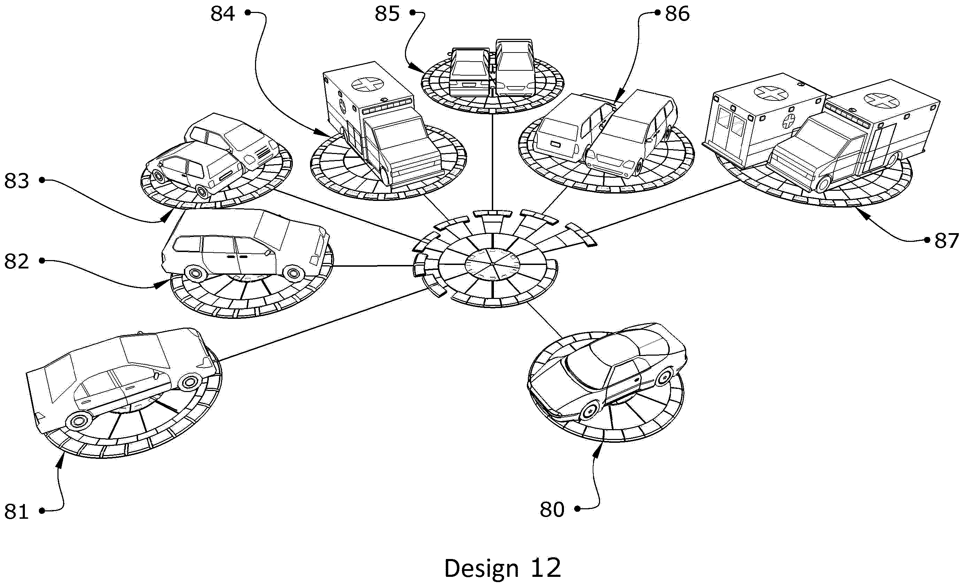

## Claims

1. A low profile rotating platform for vehicles, defined by its ability to offer an expandable, modular structure and comprising of multiple standardized basic elements, consisting of:
a) surface elements, which connected to each other compose two independent, circular surfaces, parallel to the ground, of which one, that is defined as the stable surface (2) is of circular shape and in contact with the ground, whereas the other that is defined as the rotation surface (1) is of circular ring shape on which the vehicle in rotation is placed and rotates on the stable surface and around their common virtual axis, vertical to their centre that is the centre of the platform as well,
b) rolling carriers (30) which are flat shaped and in each one of them nestles a small number of little spheres (302) which rotate freely, protruding on both sides of the rolling carrier (30) and connected to each other, compose an independent rolling surface (3) of circular ring shape, which has the same centre as the platform and is of identical dimensions as the rotation surface (1), wherby placed between the rotation surface (1) and the stable surface (2), the rolling surface minimizes the friction during the surfaces (1) rotation,
c) peripheral elements (45) containing a motion mechanism (5) and the peripheral elements containing delimitation wheels (46), which connected and aligned firmly with each other, compose a peripheral ring (4), which is connected firmly to the circular stable surface (2) along its periphery, delimiting the rotation surface's (1) rotation, using delimitation wheels (6A),
d) the motion mechanisms (5) which are embodied in the peripheral elements (45) move a motion belt (54), which rotates the rotation surface (1) along the circular ring's large periphery,
e) the delimitation wheels are encapsulated horizontally on one hand in the peripheral elements (46) and in the level of the rotation surface's (1) ring outer periphery and on the other hand delimitation wheels (6B) are encapsulated horizontally in the elements of the centre (203) of the stable surface (1), delimiting its smooth rotation,
whereby the rotating surface (1) can be expanded in radial steps, by peripherally adding each time to the already existing structure a new expansion ring, consisting of new structural elements for the stable surface's expansion (11)-(17), elements for the rotation surface's expansion (21)-(27), elements for the peripheral ring's expansion (471)-(477) and the rolling carriers (30), in order to rotate larger or more than one vehicles.

2. A low profile rotating platform for vehicles, according to claim 1, **characterised in that** the circular shaped stable surface (2) comprises of a circle formed by identical, circular sector shaped, surface elements (203) and is surrounded by a circular ring, formed by identical, circular ring sector shaped, surface elements (20), all connected and aligned to each other.

3. A low profile rotating platform for vehicles, according to claim 1, **characterised in that** the circular shaped rotation surface ring (1) comprises of connected and aligned firmly to each other, circular ring sector shaped, basic elements of the rotation surface (10), whereby their external curvy side, is formed with a recess that is traversed by the motion belt (54), or is used for the connection and alignment with an expansion ring and the inner curvy side is formed with a protrusion which is used either for contact with the delimitation wheels, or to link and align with a previous expansion ring.

4. A low profile rotating platform for vehicles, according to claim 1, **characterised in that** the rolling carriers (30) connected to each other sequentially in concentric circular rings, formulate the circular ring shaped rolling surface (3), where every ring is locked to the previous and of smaller radius one, through a locking notch (308) and a locking dent (309), whereby the smaller ring's rolling carriers bear alongside the inner periphery, a small horizontal wheel (304) to connect with the elements of the centre (203) of the stable surface and likewise the rolling carriers (30) of the larger ring bear alongside the outer periphery a small horizontal wheel (303) to connect with the peripheral ring (4).

5. A low profile rotating platform for vehicles, according to claim 1 and 4, **characterised in that** the rolling carriers (30), which are of quadrilateral shape, in order to form a closed circular ring, connect to each other loosely, two by two, with low tolerance on the connecting point (305) through the locking rods (301) which define their rotation axis as well, whereby on one hand they acquire the appropriate connection angle (306), in proportion to the ring's radius to which they belong to and on the other hand the tolerance sum allows the addition or the removal of a rolling carrier (30), in order for the circular ring to close.

6. A low profile rotating platform for vehicles, according to claim 1, **characterised in that** the motion mechanism (5), which is embodied in the peripheral element (45), comprises of an electric motor (51) of low height, that puts in motion a construction of gears which function as a reduction gear (52) and which guide a system of three pulleys (53), whereby two of the pulleys are tangent to the rotation surface (1) and to the circular cross sectioned motion belt (54), which surrounds the third pulley in between the other two, whereby the motion is transferred from the motor-reduction gear system, initially to the third pulley and through two gears to the other two pulleys in order to rotate the rotation surface (1) to its large periphery.

7. A low profile rotating platform for vehicles, according to claim 1 and 6, **characterised in that** depending on the required running torque of the rotation surface (1) with its load, more than one peripheral elements with motion mechanism (45) are used, evenly spread in the peripheral ring (4), which is driven and controlled by a central control unit.

8. A low profile rotating platform for vehicles, according to claim 1, **characterised in that** the delimitation wheels (6A) and (6B) comprise of a parallelepiped support base for the peripheral pulley (61), which slides in an appropriate recess at the base of the peripheral element with the delimitation wheel (461), whereby the slide is controlled by flexible thrust plates (63) which are placed on the rear side of the base on which (461) a horizontal peripheral pulley is embodied (62) with a ball bearer with the same neck cross section with the motion belt (54) on which it is pushed by the flexible thrust plates (63), whereby it delimitates the rotation surface's (1) rotation while functioning as a shock absorbing mechanism.

## Patentansprüche

1. Niederquerschnittdrehplattform für Fahrzeuge, definiert durch ihre Fähigkeit, einen erweiterbaren, modularen Aufbau zu bieten und mehrere standardisierte Basiselemente zu umfassen, bestehend aus
a) Flächenelemente, die miteinander verbunden sind und bilden zwei unabhängige kreisförmige Flächen, die parallel zum Boden sind, von denen eine, definiert als die stabile Fläche (2), kreisförmig ist und in Kontakt mit dem Boden steht, während die andere, die als die Drehfläche (1) definiert ist, eine kreisförmige Ringform aufweist, auf der das rotierende Fahrzeug angeordnet ist und sich auf der stabilen Fläche und um ihre gemeinsame virtuelle Achse vertikal zu ihrer Mitte dreht, welche ist auch die Mitte der Plattform
b) Rollenträger (30), die flach geformt sind und in denen jeweils eine kleine Anzahl frei rotierender kleiner Kugeln (302) untergebracht ist, die auf beiden Seiten des Rollenträgers (30) vorstehen und miteinander verbunden sind, bilden eine unabhängige Rollfläche (3) von Kreisringform, die die gleiche Mitte wie die Plattform hat und identische Abmessungen wie die Drehfläche (1) aufweist, wobei die Rollfläche zwischen der Drehfläche (1) und der stabilen Fläche (2) angeordnet ist und minimiert die Reibung während der Flächen (1) Drehung
c) Umfangselementen (45), die einen Bewegungsmechanismus (5) und Begrenzungsräder (46) enthalten, die fest miteinander verbunden und ausgerichtet sind, bilden einen Umfangsring (4), der fest mit der kreisförmigen stabilen Fläche (2) verbunden ist entlang ihres Umfangs, der die Rotation der Drehfläche (1) begrenzt, mit Hilfe von Begrenzungsrädern (6A),
d) die in den Umfangselementen (45) ausgebildeten Bewegungsmechanismen (5) einen Übertragungsriemen (54) bewegen, der die Drehfläche (1) entlang der großen Peripherie des Kreisrings dreht,
e) die Begrenzungsräder sind einerseits in den Umfangselementen (46) und in der Höhe des Ringaußenumfangs der Drehfläche (1) horizontal gekapselt und andererseits sind die Begrenzungsräder (6B) in den Elementen der Mitte (203) der stabilen Fläche (1) horizontal eingekapselt, und sie begrenzen seine sanfte Rotation,
wobei die Drehfläche (1) in radialen Schritten expandiert werden kann, indem jedesmal zu der bereits existierenden Struktur ein neuer Ausdehnungsring peripher hinzugefügt wird, der aus neuen Strukturelementen für die Ausdehnung der stabile Fläche (11) - (17), Elementen für die Ausdehnung der Drehfläche (21) - (27), Elementen für die Ausdehnung des peripheren Rings (471) - (477) und die Rollenträger (30) besteht, um breiter oder mehr als ein Fahrzeug zu drehen

2. Niederquerschnittdrehplattform für Fahrzeuge, nach Anspruch 1, **dadurch gekennzeichnet, dass** die kreisförmige stabile Fläche (2) einen Kreis umfasst, der aus identischen, kreissektorförmigen Flächenelementen (203) gebildet ist und von einem kreisförmigen Ring umgeben ist, gebildet durch identische kreisringsegmentförmige Flächenelemente (20), die alle miteinander verbunden und zueinander ausgerichtet sind

3. Niederquerschnittdrehplattform für Fahrzeuge, nach Anspruch 1, **dadurch gekennzeichnet, daß** der kreisförmige Drehflächenring (1) fest miteinander verbunden und ausgerichtet kreisringsektorförmige Grundelemente (10) der Drehfläche umfaßt, wobei ihre äußere kurvige Seite mit einer Ausnehmung ausgebildet ist, die von dem Übertragungsriemen (54) durchquert wird oder für die Verbindung und Ausrichtung mit einem Ausdehnungsring verwendet wird und die innere kurvige Seite mit einem Vorsprung ausgebildet ist, der entweder zur Kontaktierung mit den Begrenzungsrädern verwendet wird oder zum Verbinden und Ausrichten mit einem vorherigen Ausdehnungsring

4. Niederquerschnittdrehplattform für Fahrzeuge, nach Anspruch 1, **dadurch gekennzeichnet, dass** die Rollenträger (30), die in konzentrischen kreisförmigen Ringen miteinander verbunden sind, die kreisringförmige Rollfläche (3) bilden, wobei jeder Ring durch eine Sperrkerbe (308) und eine Sperrverzahnung (309) mit dem vorherigen und dem kleineren Radius Ring verriegelt ist, wobei die Rollenträger des kleineren Rings längsseits des Innenumfangs ein kleines horizontales Rad (304) tragen, um mit den Mittelelementen (203) der stabilen Fläche verbunden zu werden und ebenso tragen die Rollenträger (30) des größeren Rings entlang des Außenumfangs ein kleines horizontales Rad (303), um mit dem Umfangsring (4) verbunden zu sein.

5. Niederquerschnittdrehplattform für Fahrzeuge, nach Anspruch 1 und 4, **dadurch gekennzeichnet, daß** die Rollenträger (30), die viereckig ausgebildet sind, um einen geschlossenen Kreisring zu bilden, lose miteinander verbunden sind, zwei zu zwei, mit geringer Toleranz an der Verbindungsstelle (305) durch die Verriegelungsstangen (301), die ebenfalls ihre Rotationsachse definieren, wobei sie einerseits den entsprechenden Verbindungswinkel (306) im Verhältnis zu dem Ringradius, zu dem sie gehören, erhalten und andererseits die Toleranzsumme das Hinzufügen oder das Entfernen eines rollenden Trägers (30) ermöglicht, um den Kreisring zu schließen.

6. Niederquerschnittdrehplattform für Fahrzeuge, nach Anspruch 1 und 4, **dadurch gekennzeichnet, dass** der Bewegungsmechanismus (5), der in dem Umfangselement (45) ausgebildet ist, einen Elektromotor (51) mit geringem Gewicht umfasst, der eine Konstruktion von Zahnrädern in Betrieb setzt, die als Untersetzungsgetriebe (52) dient und ein System von drei Riemenscheiben (53) führt, wobei zwei der Riemenscheiben die Drehfläche (1) und den Übertragungsriemen mit kreisförmigem Querschnitt tangieren (54), der die dritte Riemenscheibe zwischen den beiden anderen umgibt, wobei die Bewegung von dem zunächst zu der dritten Riemenscheibe und über zwei Zahnräder zu den anderen zwei Riemenscheiben übertragen wird, um die Drehfläche (1) zu ihrem großen Umfang zu drehen.

7. Niederquerschnittdrehplattform für Fahrzeuge, nach Anspruch 1 und 6, **dadurch gekennzeichnet, daß** je nach benötigtem Laufmoment der Drehfläche (1) mit seiner Last mehr als ein Umfangselemente mit Bewegungsmechanismus (45) verwendet werden, gleichmäßig im Umfangsring (4) verteilt, der von einer zentralen Steuereinheit angesteuert und gesteuert wird

8. Niederquerschnittdrehplattform für Fahrzeuge, nach Anspruch 1, **dadurch gekennzeichnet, dass** die Begrenzungsräder (6A) und (6B) eine parallelepipedische Stützbasis für die Umfangsriemenscheibe (61) umfassen, die in einer entsprechenden Ausnehmung an der Basis des Umfangselements mit dem Begrenzungsrad (461) gleitet, wobei der Schieber durch flexible Druckplatten (63) gesteuert wird, die auf der Rückseite der Basis angeordnet sind, auf der (461) eine horizontale Umfangsriemenscheibe (62) ausgebildet ist, mit einem Kugelträger mit dem gleichen Halsquerschnitt wie der Übertragungsriemen (54), auf den er durch die flexiblen Druckplatten (63) geschoben wird, wobei er die Rotation der Rotationsfläche (1) begrenzt und gleichzeitig als Stoßdämpfungsmechanismus fungiert.

## Revendications

1. Plateforme tournante à section basse pour véhicules, définie par sa capacité à offrir une structure expansible et modulaire et comprenant plusieurs éléments de base standardisés, composée d'/de) :
a) éléments de surface, qui étant reliés les uns aux autres, forment deux surfaces circulaires indépendantes, parallèles au sol, dont l'une, définie comme la surface stable (2), est de forme circulaire et en contact avec le sol, tandis que l'autre défini comme la surface de rotation (1) est d'une forme d'anneau circulaire sur laquelle le véhicule en rotation est placé et tourné sur la surface stable et autour de leur axe virtuel commun, vertical à leur centre qui est aussi le centre de la plate-forme
b) supports roulants (30) qui ont une forme plate et dans chacun desquels se loge un petit nombre de petites sphères (302) en rotation libre, dépassant des deux côtés du support roulant (30) et reliées les unes aux autres, forment une surface roulante (3) indépendante de forme d'anneau circulaire, qui a le même centre que la plate-forme et est de dimensions identiques à la surface de rotation (1), de sorte que la surface roulante étant placée entre la surface de rotation (1) et la surface stable (2) minimise le frottement lors de la rotation des surfaces (1),
c) éléments périphériques (45) contenant un mécanisme de déplacement (5), les éléments périphériques contenant des roues de délimitation (46), qui étant reliés et alignés fermement l'un avec l'autre, forment un anneau périphérique (4) qui est relié fermement à la surface stable circulaire (2) le long de sa périphérie, délimitant la rotation de la surface de rotation (1), à l'aide de roues de délimitation (6A),
d) les mécanismes de mouvement (5) qui sont incorporés dans les éléments périphériques (45) déplacent une courroie de transmission (54), qui fait tourner la surface de rotation (1) le long de la périphérie de l'anneau circulaire,
e) les roues de délimitation sont encapsulées horizontalement d'une part dans les éléments périphériques (46) et au niveau de la périphérie externe de l'anneau de la surface de rotation (1) et d'autre part les roues de délimitation (6B) sont encapsulées horizontalement dans les éléments du centre (203) de la surface stable (1), délimitant sa rotation en douceur,
de sorte que la surface de rotation (1) peut être étendue par paliers radiaux, en ajoutant à la périphérie à chaque fois à la structure déjà existante un nouveau anneau d'expansion, constitué de nouveaux éléments structurels pour l'augmentation de la surface stable (11) - (17), des éléments pour l'augmentation de la surface de rotation (21) - (27), des éléments pour l'augmentation de l'anneau périphérique (471) - (477) et des supports roulants (30), pour faire tourner plus larges ou plus d'un véhicule.

2. Plateforme tournante à section basse pour véhicules, selon la revendication 1, **caractérisée en ce que** la surface stable (2) de forme circulaire comprend un cercle formé d'éléments de surface (203) de forme de secteur circulaire identiques et est entourée d'un anneau circulaire, formé par des éléments de surface (20) en forme de secteurs d'anneaux circulaires identiques, tous reliés et alignés l'un par rapport à l'autre

3. Plateforme tournante à section basse pour véhicules, selon la revendication 1, **caractérisée en ce que** l'anneau circulaire de la surface de rotation (1) comporte des éléments de base (10) de la surface de rotation reliés et alignés fermement l'un avec l'autre, de sorte que leur côté curviligne externe est formé avec un évidement qui est traversé par la courroie de transmission (54), ou est utilisé pour la connexion et l'alignement avec un anneau d'expansion et le côté incurvé intérieur est formé avec une protubérance qui est utilisée soit pour le contact avec les roues de délimitation, ou pour se lier et aligner avec un anneau d'expansion précédent.

4. Plateforme tournante à section basse pour véhicules, selon la revendication 1, **caractérisée en ce que** les supports roulants (30) reliés les uns aux autres en anneaux circulaires concentriques forment la surface roulante circulaire (3) en forme d'anneau, où chaque anneau est verrouillé à l'anneau précédent et de plus petit rayon, à travers une encoche de verrouillage (308) et une denture de verrouillage (309), de sorte que les supports roulants de plus petit anneau supportent, le long de la périphérie interne, une petite roue horizontale (304) pour se connecter aux éléments du centre (203) de la surface stable et de même les supports roulants (30) de plus grande anneau portent le long de la périphérie extérieure une petite roue horizontale (303) pour se connecter à l'anneau périphérique (4).

5. Plateforme tournante à section basse pour véhicules, selon les revendications 1 et 4, **caractérisée en ce que** les supports roulants (30), qui sont de forme quadrilatérale, pour former un anneau circulaire fermé, se relient lâchement l'un à l'autre, deux par deux, avec une tolérance faible sur le point de connexion (305) à travers les tiges de verrouillage (301) qui définissent également leur axe de rotation, de sorte que, d'une part, ils acquièrent l'angle de connexion approprié (306), proportionnellement au rayon de l'anneau auquel ils appartiennent et, d'autre part, la somme de tolérance permet l'addition ou l'enlèvement d'un support roulant (30), pour que l'anneau circulaire se ferme.

6. Plateforme tournante à section basse pour véhicules, selon la revendication 1 et 4, **caractérisée en ce que** le mécanisme de déplacement (5), qui est incorporé dans l'élément périphérique (45), comprend un moteur électrique (51) de faible poids, qui met en mouvement une construction d'engrenages qui fonctionnent comme un réducteur (52) et qui guident un système de trois poulies (53), de sorte que deux des poulies sont tangentes à la surface de rotation (1) et à la courroie de transmission de coupe circulaire (54), qui entoure la troisième poulie entre les deux autres, de sorte que le mouvement est transféré du système de réduction du moteur, initialement à la troisième poulie et à travers deux engrenages aux deux autres poulies afin de faire tourner la surface de rotation (1) à sa grande périphérie.

7. Plateforme tournante à section basse pour véhicules, selon les revendications 1 et 6, **caractérisée en ce que**, en fonction du couple de roulement requis de la surface de rotation (1) avec sa charge, plusieurs éléments périphériques avec mécanisme de déplacement (45) sont utilisés, répartis uniformément dans l'anneau périphérique (4), qui est entraîné et commandé par une unité de commande centrale

8. Plateforme tournante à section basse pour véhicules, selon la revendication 1, **caractérisée en ce que** les roues de délimitation (6A) et (6B) comportent une base de support parallélépipédique pour la poulie périphérique (61), qui coulisse dans un évidement approprié à la base de l'élément périphérique avec la roue de délimitation (461), de sorte que la glissière est commandée par des plaques de poussée flexibles (63) qui sont placées sur le côté arrière de la base sur laquelle (461) une poulie périphérique horizontale est montée (62) avec porte-billes ayant la même section de col que la courroie de transmission (54) sur laquelle il est poussé par les plaques de pression flexibles (63), délimitant ainsi la rotation de la surface de rotation (1) tout en agissant comme un amortisseur.
